# EUROPEAN PATENT SPECIFICATION

(11) **EP 2 670 991 B1**
(45) Date of publication and mention of the grant of the patent: **12.08.2015**
(21) Application number: 12702802.5
(22) Date of filing: 31.01.2012
(51) Int. Cl.: F16C 19/18, F16C 33/58

(54) **ROLLING BEARING FOR BELT TENSIONING ROLLER DEVICE**
WÄLZLAGER FÜR EINE RIEMENSPANNROLLE
PALIER À ROULEMENT POUR DISPOSITIF DE GALET TENDEUR DE COURROIE

(30) Priority: 02.02.2011 FR 1150801
(43) Date of publication of application: 11.12.2013
(73) Proprietor: Aktiebolaget SKF, 415 50 Göteborg (SE)
(72) Inventor: LESCORAIL, Romuald, F-37380 Saint Laurent en Gatines (FR); LIÈGE, Frédéric, F-37260 Monts (FR)
(74) Representative: Casalonga, Axel
(86) International application number: PCT/EP2012/051558
(87) International publication number: WO 2012/104300

(56) References cited:
- DE-A1-102007 034 501
- FR-A- 903 753
- FR-A1- 2 401 033
- FR-A1- 2 920 851

## Description

The present invention relates to the field of automatic tensioning roller devices, notably used to provide an adequate tension of chains or belts, for example timing belts of motor vehicle internal combustion engines.

A particularly valuable application of the invention relates to the rolling bearing associated with a belt tensioning device.

A belt or chain tensioning roller device usually comprises a support designed to be attached to the engine block, and a movable portion that can move angularly relative to the support by means of a smooth bearing. The movable portion is provided with an eccentric or an articulated arm, and with a rolling bearing on which is mounted a roller or pulley designed to be brought into contact with the belt or chain. A spring applies a permanent tensioning force between the support and the movable portion, bringing the roller into contact with the belt or the chain, with an appropriate tension of the belt.

The tensioning roller device thus makes it possible to keep the required tension of the belt or chain in a certain tolerance range, despite the dimensional variations of the belt or the chain being able to be generated by wear or else by temperature variations.

The failure of a belt, in particular a timing belt of a motor vehicle combustion engine can cause considerable damage to the engine and harm the safety of operation. It is therefore important to maintain the tension of the belt or chain.

Document FR 2 920 851 discloses a belt tensioning roller device provided with an adjusting eccentric designed to be attached to an engine block by means of a base plate, and a working eccentric mounted rotatably on the adjusting eccentric. A roller or pulley is attached to a rolling bearing mounted on the working eccentric. The said rolling bearing comprises an outer ring, an inner ring and a row of rolling elements placed between the said rings. The inner ring and outer ring are one-piece rings.

In order to adjust the tension of the engine belt, a screw is installed in the bore of the adjusting eccentric without being tightened, so that the adjusting eccentric can be moved in rotation relative to the engine block; the adjusting eccentric is then made to pivot with the aid of an operating spanner relative to the base plate, so as to bring the roller or pulley into contact with the belt. By reaction of the belt on the roller, the working eccentric sustains an automatic rotation relative to the base plate.

However, because of the slight radial distance separating the axis of the adjusting eccentric and the axis of the working eccentric, the automatic rotation of the working eccentric may not be sufficient to obtain the desired tension of the belt. It is then necessary to also provide a manual adjustment of this tension.

Document FR 903 753 A discloses a rolling bearing having inner and outer rings manufactured by pressing a steel blank, and a row of rolling elements there between. The inner ring is mounted on a rotating shaft.

Each rolling element is in contact in two points of the rings.

The object of the present invention is therefore to overcome these drawbacks.

More particularly, the object of the present invention is to provide a rolling bearing associated with a tensioning roller device that is particularly easy to manufacture, to install, has restricted bulk, is economical and requires no manual adjustment of the tension.

The subject of the invention is a rolling bearing for a belt or chain tensioning roller device comprising two inner rings, two outer rings and two rows of rolling elements. Each row of rolling elements is placed between an inner ring and an outer ring.

Each row of rolling elements is in contact via two contact zones respectively with an inner ring and an outer ring, the said inner ring and outer ring having a thin wall produced by stamping of a metal sheet or of a tube.

Thus, the bore of the rolling bearing is larger, which makes it possible to increase the radial distance separating the axis of the working eccentric from the axis of the adjusting eccentric while maintaining an unchanged dimension of the adjusting eccentric and of the smooth bearing. Moreover, when the belt tension is adjusted, the working eccentric can pivot automatically relative to the adjusting eccentric over a larger range of angular value, which dispenses with a subsequent manual operation for adjusting the tension.

According to the invention, each inner ring comprises at least one radial portion extending inwards, a substantially oblique portion in contact with the row of rolling elements, and an axial portion.

The inner rings may be mounted on a sleeve.

According to one embodiment, the rolling bearing comprises two inner adjusting spacers, each adjusting spacer being mounted between the sleeve and an inner ring.

According to another embodiment, the inner ring comprises a second radial portion extending inwards from the axial portion.

The second radial portion may interact with a groove made in the sleeve.

Advantageously, the rolling bearing comprises two sealing elements mounted on either side of the rows of rolling elements, each sealing element being in contact with one of the adjusting spacers or interacting with one of the inner rings.

According to a second aspect, the invention relates to a belt or chain tensioning roller device comprising a member that is fixed and a member that can move angularly relative to the fixed member and a roller or pulley supported by the movable member and designed to be in contact with a belt or chain, the movable member comprising a working eccentric and a rolling bearing described above mounted on the working eccentric.

Advantageously, the roller or pulley is overmoulded onto the outer rings.

The sealing elements may be anchored in the roller or pulley.

Other objects, features and advantages of the invention will appear on reading the following description, given only as a nonlimiting example, and made with reference to the appended drawings in which:
- Figure 1 is a view in axial section of a rolling bearing according to the invention; and
- Figure 2 represents a second embodiment of a rolling bearing.

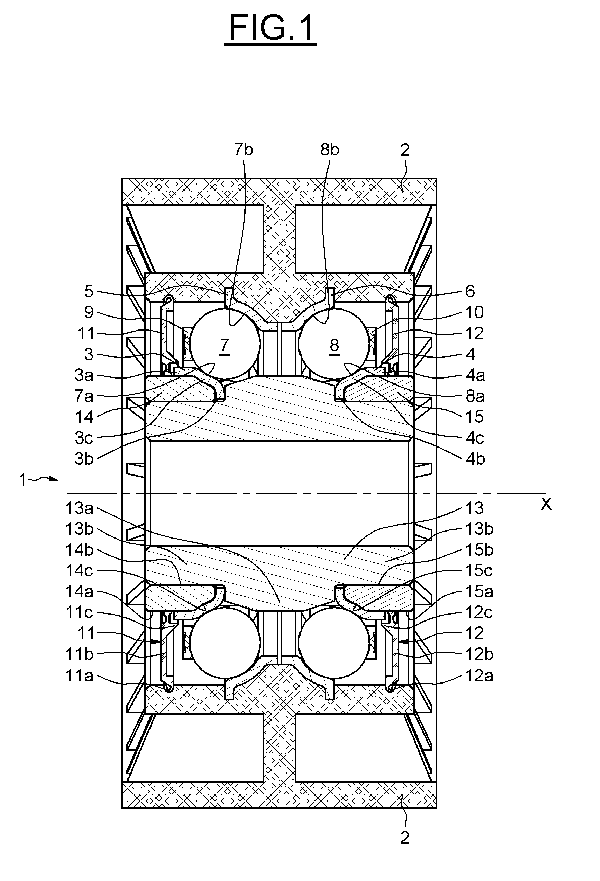

As illustrated in Figure 1, the rolling bearing, referenced 1 in its entirety, is designed to be incorporated into a belt or chain tensioning roller device (not shown) comprising a fixed member holding the tensioning roller device on an outer element, for example an engine block, a member that can move angularly relative to the fixed member, and a roller or pulley 2 supported by the movable member and designed to be in contact with the belt or chain.

The movable member comprises a working eccentric (not shown) mounted rotatably on the fixed member and the rolling bearing 1 mounted on the working eccentric and on which the roller or pulley 2 is mounted.

The rolling bearing 1, with its axis X, comprises two inner rings 3, 4, two outer rings 5, 6 and two rows of rolling elements 7, 8, in this instance made in the form of balls, placed between the outer rings 5, 6 and inner rings 3, 4, two cages 9, 10 respectively maintaining the circumferential spacing of the rolling elements 7, 8, and two flanges or seals 11, 12 that are symmetrical relative to a radial plane passing between the two rows of rolling elements 7, 8.

The inner rings 3, 4 are thin-walled rings made by stamping of a metal sheet or of a tube and are mounted on a sleeve 13 designed to be mounted on the working eccentric. As illustrated in Figure 1, each row of rolling elements 7, 8 is in contact via two contact zones 7a, 7b, 8a, 8b respectively with an inner ring 3, 4 and an outer ring 5, 6.

Each inner ring 3, 4 comprises an axial portion 3a, 4a extending inwards by a radial portion 3b, 4b via a substantially oblique portion 3c, 4c. The inner surfaces of the oblique portions 3c, 4c form a raceway for the rolling elements 7, 8. The inner rings 3, 4 are respectively symmetrical relative to a plane passing between the two rows of rolling elements 7, 8 and are identical to the outer rings 5, 6 also symmetrical relative to the plane passing between the rows of rolling elements 7, 8. The rolling bearing 1 comprises two rows of rolling elements 7, 8, each placed between an inner ring 3, 4 and an outer ring 5, 6, so that each row of rolling elements 7, 8 is in contact with a contact zone with each outer ring 5, 6 and a contact zone with each inner ring 3, 4.

The sleeve 13 comprises a central portion 13a of which the outer surface matches the shape of the inner rings 3, 4 and two lateral portions 13b of which the outer bore interacts with the inner spacers 14, 15.

The rolling bearing 1 also comprises two inner adjusting spacers 14, 15 that are substantially identical and symmetrical relative to a radial plane passing through the centre of the rows of rolling elements 7, 8. Each inner adjusting spacer 14, 15 is placed between one of the inner rings 3, 4 and the sleeve 13 designed to be mounted on the working eccentric. Each inner adjusting spacer 14, 15 comprises an upper surface 14a, 15a connected to a lower surface 14b, 15b via a rounded surface 14c, 15c matching the shape of the substantially oblique portion 3c, 4c of the associated inner ring 3, 4. Each of the sealing flanges 11, 12 comprises an upper portion 11a, 12a anchored in the pulley 2, extending via a radial portion 11b, 12b beyond the axial portion 3a, 4a of one of the inner rings 3, 4. The radial portion 11b, 12b has a lip 11c, 12c positioned axially above the axial portion 3a, 4a of the associated inner ring 3, 4.

As illustrated in Figure 1, the pulley or roller 2 is overmoulded directly onto each outer ring 5, 6. In the embodiment described in Figure 1, the adjusting spacers 14, 15 are held axially on the sleeve 13 by any appropriate means, for example, by crimping, welding, bonding or by forced fitting. As a variant, it would be possible to make the bore of each spacer 14, 15 threaded so as to interact with a matching thread on the sleeve 13.

The seals 11, 12 are mounted radially between one of the adjusting spacers 14, 15 and the pulley 2 and are symmetrical relative to a radial plane passing through the centre of the rolling elements 7, 8. The rolling bearing 1 ensures the rotational freedom of the roller or pulley 2 relative to the working eccentric and the absorption of the radial forces.

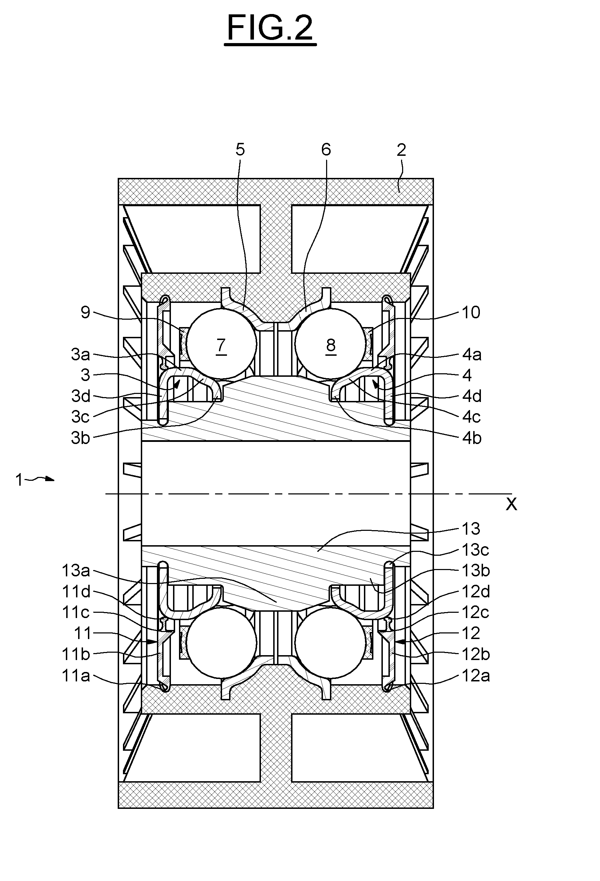

The embodiment illustrated in Figure 2, in which the same elements have the same references, represents a rolling bearing 1 comprising two rows of rolling elements 7, 8, each placed between an inner ring 3, 4 and an outer ring 5, 6, so that each row of rolling elements 7, 8 is in contact with a contact zone with each outer ring 5, 6 and a contact zone with each inner ring 3, 4.

The rolling bearing 1, with its axis X, differs from the rolling bearing illustrated in Figure 1 in that the inner rings 3, 4 are mounted directly onto the sleeve 13 and that the sealing flanges 11, 12 are in frictional contact with the axial portion 3a, 4a of the inner rings 3, 4.

Each inner ring 3, 4 comprises an axial portion 3a, 4a extending towards the inside of the rolling bearing by a radial portion 3b, 4b via a substantially oblique portion 3c, 4c. The axial portion 3a, 4a extends from the opposite end to the radial portion 3b, 4b via a second radial portion 3d, 4d of greater length. The second radial portions 3d, 4d interact with a groove 13c made on each of the lateral portions 13b of the sleeve 13. The inner rings 3, 4 are respectively symmetrical relative to a plane passing between the two rows of rolling elements 7, 8 and are identical to the outer rings 5, 6 that are also symmetrical relative to the plane passing between the rows of rolling elements 7, 8. The inner rings 3, 4 are held axially on the sleeve 13 by any appropriate means, for example, by crimping, welding, caulking or by force-fitting.

Each of the sealing flanges 11, 12 comprises an upper portion 11a, 12a anchored in the pulley 2, extending via a radial portion 11b, 12b towards the inside of the rolling bearing 1. The radial portion 11b, 12b has a lip 11c, 12c positioned axially above the axial portion 3a, 4a of the associated inner ring 3, 4 and extends via a lower portion 11d, 12d in frictional contact with the axial portion 3a, 4a of the associated inner ring 3, 4.

The invention is not limited to the embodiments described and may be subjected to a series of variants.

Thanks to the inner and outer rings made by stamping of a metal sheet or of a tube, the bore of the rolling bearing can be larger than when the rings are in one piece, which makes it possible to increase the radial distance separating the axis of the working eccentric from the axis of the adjusting eccentric while retaining an unchanged dimensioning of the adjusting eccentric and of the smooth bearing. Moreover, when the belt tension is adjusted, the working eccentric can pivot automatically relative to the adjusting eccentric over a range of larger angular value, which makes it possible to dispense with a subsequent manual operation for adjusting the tension.

Moreover, the adjusting spacers mounted axially make it possible to adjust the clearance of the rolling bearing. The axial positioning of each spacer is therefore determined as a function of the desired operating clearance for the rolling bearing. The spacers also have a function of stiffening the associated inner ring.

Such a rolling bearing makes it possible to reduce manufacturing costs and to dispense with a subsequent manual operation for adjusting the tension.

## Claims

1. Rolling bearing for a belt or chain tensioning roller device comprising two inner rings (3, 4), two outer rings (5, 6) and two rows of rolling elements (7, 8), each row of rolling elements (7, 8) being placed between an inner ring (3, 4) and an outer ring (5, 6), each row of rolling elements (7, 8) being in contact via two contact zones (7a, 7b, 8a, 8b) respectively with an inner ring (3, 4) and an outer ring (5, 6), the said inner ring (3, 4) and outer ring (5, 6) having a thin wall produced by stamping of a metal sheet or of a tube, **characterized in that** each inner ring (3, 4) comprises at least one radial portion (3b, 4b) extending inwards, a substantially oblique portion (3c, 4c) in contact with the row of rolling elements (7, 8), and an axial portion (3a, 4a) said axial portion (3a, 4a) extending towards the inside of the rolling bearing by said radial portion (3b, 4b) via said substantially oblique portion (3c, 4c).

2. Rolling bearing according to Claim 1, in which the inner rings (3, 4) are mounted on a sleeve (13).

3. Rolling bearing according to Claim 2, comprising two inner adjusting spacers (14, 15), each adjusting spacer (14, 15) being mounted between the sleeve (13) and an inner ring (3, 4).

4. Rolling bearing according to one of Claims 1 to 2, in which the inner ring (3, 4) comprises a second radial portion (3d, 4d) extending inwards from the axial portion (3a, 4a).

5. Rolling bearing according to Claim 4, in which the second radial portion (3d, 4d) interacts with a groove (13c) made in the sleeve (13).

6. Rolling bearing according to Claim 3, comprising two sealing elements (11, 12) mounted on either side of the rows of rolling elements (7, 8), each sealing element being in contact with one of the adjusting spacers (14, 15).

7. Rolling bearing according to Claim 4 or 5, comprising two sealing elements (11, 12) mounted on either side of the rows of rolling elements (7, 8), each sealing element (11, 12) interacting with one of the inner rings (3, 4).

8. Belt or chain tensioning roller device comprising a member that is fixed and a member that can move angularly relative to the fixed member and a roller or pulley (2) supported by the movable member and designed to be in contact with a belt or chain, the movable member comprising a working eccentric and a rolling bearing (1) according to one of the preceding claims mounted on the working eccentric.

9. Tensioning roller device according to Claim 8, in which the roller or pulley (2) is overmoulded onto the outer rings (5, 6).

10. Tensioning roller device according to Claim 8 or 9, in which the sealing elements (11, 12) are anchored in the roller or pulley (2).

## Patentansprüche

1. Wälzlager für eine Riemen- oder Kettenspannrollenvorrichtung mit zwei Innenringen (3, 4), zwei Außenringen (5, 6) und zwei Reihen von Wälzkörpern (7, 8), wobei jede Reihe von Wälzkörpern (7, 8) zwischen einem Innenring (3, 4) und einem Außenring (5, 6) platziert ist, wobei jede Reihe von Wälzkörpern (7, 8) über zwei Kontaktzonen (7a, 7b, 8a, 8b) mit einem Innenring (3, 4) bzw. einem Außenring (5, 6) in Kontakt steht, wobei der Innenring (3, 4) und der Außenring (5, 6) eine durch Tiefziehen eines Blechs oder eines Rohrs erzeugte dünne Wand aufweisen, **dadurch gekennzeichnet, dass** jeder Innenring (3, 4) mindestens einen sich nach innen erstreckenden radialen Teil (3b, 4b), einen im Wesentlichen schrägen Teil (3c, 4c), der mit der Reihe von Wälzkörpern (7, 8) in Kontakt steht, und einen axialen Teil (3a, 4a) umfasst, wobei sich der axiale Teil (3a, 4a) über den im Wesentlichen schrägen Teil (3c, 4c) durch den radialen Teil (3b, 4b) zur Innenseite des Wälzlagers erstreckt.

2. Wälzlager nach Anspruch 1, wobei die Innenringe (3, 4) an einer Buchse (13) angebracht sind.

3. Wälzlager nach Anspruch 2, das zwei innere Passelemente (14, 15) umfasst, wobei jedes Passelement (14, 15) zwischen der Buchse (13) und einem Innenring (3, 4) angebracht ist.

4. Wälzlager nach einem der Ansprüche 1 bis 2, wobei der Innenring (3, 4) einen zweiten radialen Teil (3d, 4d) umfasst, der sich von dem axialen Teil (3a, 4a) nach innen erstreckt.

5. Wälzlager nach Anspruch 4, wobei der zweite radiale Teil (3d, 4d) mit einer in der Buchse (13) ausgebildeten Nut (13c) zusammenwirkt.

6. Wälzlager nach Anspruch 3, das zwei Dichtungselemente (11, 12) umfasst, die auf beiden Seiten der Reihen von Wälzkörpern (7, 8) angebracht sind, wobei jedes Dichtungselement mit einem der Passelemente (14, 15) in Kontakt steht.

7. Wälzlager nach Anspruch 4 oder 5, das zwei Dichtungselemente (11, 12) umfasst, die auf beiden Seiten der Reihen von Wälzkörpern (7, 8) angebracht sind, wobei jedes Dichtungselement (11, 12) mit einem der Innenringe (3, 4) zusammenwirkt.

8. Riemen- oder Kettenspannrollenvorrichtung, die ein feststehendes Glied und ein Glied, das sich bezüglich des feststehenden Glieds bewegen kann, und eine durch das bewegliche Glied gestützte Rolle oder Riemenscheibe (2) umfasst, die dazu ausgeführt ist, mit einem Riemen oder einer Kette in Kontakt zu stehen, wobei das bewegliche Glied einen Arbeitsexzenter und ein Wälzlager (1) nach einem der vorhergehenden Ansprüche, das an dem Arbeitsexzenter angebracht ist, umfasst.

9. Spannrollenvorrichtung nach Anspruch 8, wobei die Rolle oder Riemenscheibe (2) an die Außenringe (5, 6) angeformt ist.

10. Spannrollenvorrichtung nach Anspruch 8 oder 9, wobei die Dichtungselemente (11, 12) in der Rolle oder Riemenscheibe (2) verankert sind.

## Revendications

1. Palier à roulement pour dispositif de galet tendeur de courroie ou de chaîne comprenant deux bagues intérieures (3, 4), deux bagues extérieures (5, 6) et deux rangées d'éléments roulants (7, 8), chaque rangée d'éléments roulants (7, 8) étant disposée entre une bague intérieure (3, 4) et une bague extérieure (5, 6), chaque rangée d'éléments roulants (7, 8) étant en contact par deux zones de contact (7a, 7b, 8a, 8b) respectivement avec une bague intérieure (3, 4) et une bague extérieure (5, 6), lesdites bagues intérieures (3, 4) et extérieures (5, 6) comportant une paroi mince réalisée par emboutissage d'une tôle ou d'un tube, **caractérisé en ce que** chaque bague intérieure (3, 4) comprend au moins une portion radiale (3b, 4b) s'étendant vers l'intérieur, une portion sensiblement oblique (3c, 4c) en contact avec la rangée d'éléments roulants (7, 8), et une portion axiale (3a, 4a), ladite portion axiale (3a, 4a) s'étendant vers l'intérieur du palier à roulement à côté de ladite portion radiale (3b, 4b) par le biais de ladite portion sensiblement oblique (3c, 4c).

2. Palier à roulement selon la revendication 1, dans lequel les bagues intérieures (3, 4) sont montées sur un manchon (13).

3. Palier à roulement selon la revendication 2, comprenant deux cales de réglage intérieures (14, 15), chaque cale de réglage (14, 15) étant montée entre le manchon (13) et une bague intérieure (3, 4).

4. Palier à roulement selon l'une des revendications 1 et 2, dans lequel la bague intérieure (3, 4) comprend une seconde portion radiale (3d, 4d) s'étendant à partir de la portion axiale (3a, 4a) vers l'intérieur.

5. Palier à roulement selon la revendication 4, dans lequel la seconde portion radiale (3d, 4d) coopère avec une rainure (13c) pratiquée dans le manchon (13).

6. Palier à roulement selon la revendication 3, comprenant deux éléments d'étanchéité (11, 12) montés de part et d'autre des rangées d'éléments roulants (7, 8), chaque élément d'étanchéité étant en contact avec une des cales de réglage (14, 15).

7. Palier à roulement selon la revendication 4 ou 5, comprenant deux éléments d'étanchéité (11, 12) montés de part et d'autre des rangées d'éléments roulants (7, 8), chaque élément d'étanchéité (11, 12) coopérant avec une des bagues intérieures (3, 4).

8. Dispositif de galet tendeur de courroie ou de chaîne comprenant un organe fixe et un organe mobile angulairement par rapport à l'organe fixe et un galet ou une poulie (2) supporté par l'organe mobile et destiné à être en contact avec une courroie ou chaîne, l'organe mobile comprenant un excentrique de travail et un palier à roulement (1) selon l'une des revendications précédentes monté sur l'excentrique de travail.

9. Dispositif de galet tendeur selon la revendication 8, dans lequel le galet ou la poulie (2) est surmoulé sur les bagues extérieures (5, 6).

10. Dispositif de galet tendeur selon la revendication 8 ou 9, dans lequel les éléments d'étanchéité (11, 12) sont ancrés dans le galet ou la poulie (2).
